# NEUE EUROPÄISCHE PATENTSCHRIFT

(11) **EP 1 509 752 B2**
(45) Veröffentlichungstag und Bekanntmachung des Hinweises auf die Entscheidung über den Einspruch: **12.08.2009**
(45) Hinweis auf die Patenterteilung: 02.11.2006
(21) Anmeldenummer: 03735719.1
(22) Anmeldetag: 26.05.2003
(51) Int. Cl.: G01G 23/00, G01G 23/38

(54) **VORRICHTUNG ZUR BETRIEBSZUSTANDSÜBERWACHUNG FÜR EINE WAAGE**
DEVICE FOR MONITORING THE OPERATING STATE OF A SCALE
DISPOSITIF DE SURVEILLANCE DE L'ETAT DE FONCTIONNEMENT D'UNE BALANCE

(30) Priorität: 29.05.2002 DE 10224123
(43) Veröffentlichungstag der Anmeldung: 02.03.2005
(73) Patentinhaber: Mettler-Toledo AG, 8606 Greifensee (CH)
(72) Erfinder: KÜNZI, Hansruedi, CH-8606 Greifensee (CH); LEISINGER, Roger, CH-8044 Zürich (CH); BLÖCHLINGER, Marc, CH-8707 Uetikon (CH)
(86) Internationale Anmeldenummer: PCT/EP2003/050196
(87) Internationale Veröffentlichungsnummer: WO 2003/100362

(56) Entgegenhaltungen:
- EP- - 0 689 041
- EP-A- 0 689 041
- DE- - 2 217 147
- DE- - 3 714 540
- DE- - 19 713 799
- DE-A- 3 234 372
- DE-C- 19 709 624
- DE-U- 6 906 210
- DE-U- 9 415 153
- DE-U- 9 415 153
- DE-U- 29 914 881
- FR-A- 2 639 111

## Beschreibung

Die Erfindung betrifft eine Vorrichtung zur Betriebszustandsüberwachung für ein gravimetrisches Messgerät, insbesondere eine Waage mit einer Wägezelle, mit einer eine Signalverarbeitungseinrichtung, eine Speichereinrichtung sowie einen Zeitgeber aufweisenden Wägeelektronik, mit einer Ausgabeeinheit sowie mindestens einem elektronischen Neigungssensor, welcher in Kommunikationsverbindung mit der Signalverarbeitungseinrichtung steht.

Waagen und andere gravimetrische Messgeräte, wie beispielsweise Geräte zur gravimetrischen Feuchtigkeitsbestimmung oder Thermogravimetriegeräte, sind Geräte, die ganz besonderen Anforderungen hinsichtlich ihrer Aufstellung genügen müssen. Es ist notwendig, dass eine Waage, beispielsweise in einem Labor, so positioniert wird, dass der Lastaufnehmer ihrer Wägezelle exakt in Richtung der Schwerkraft ausgerichtet ist. Abweichungen davon führen zu einem Wägeresultat, welches um den Faktor Cosinus des Neigungswinkels verringert ist, wobei der Neigungswinkel die Abweichung der Ausrichtung des Lastaufnehmers der Wägezelle gegenüber der Richtung der Schwerkraft angibt, beziehungsweise bei exakt montierter Waage die Abweichung der Auflage für die Wägezelle von der Horizontalen. Diese ideale Ausrichtung kann auch als Bezugslage der Waage bezeichnet werden. Aus diesem Grunde müssen eichfähige Waagen häufig mit einer Nivelliereinrichtung und einem Neigungssensor, beispielsweise einer Libelle, das heisst einem vorzugsweise aus Glas bestehenden Behälter, der unter Bildung einer Gasblase teilweise mit Flüssigkeit gefüllt ist, ausgerüstet werden. Die Nivelliereinrichtung ist bevorzugt an den Stellfüssen der Waage realisiert, wobei meistens für zwei Stellfüsse mittels einer Schraube durch Verdrehen deren Höhe jeweils verändert wird.

Im Stand der Technik sind auch verschiedene Neigungsmesser bekannt, welche die Neigung einer Waage an ihrem Aufstellungsort elektronisch erfassen. So beschreibt die DE-32 34 372-A1 verschiedene Ausführungsformen von elektronischen Neigungsmessern, beispielsweise einer Libelle mit optischer Abtastung, einen kapazitiver Neigungsmesser oder ein Pendel, das mit einem Dehnmessstreifen zur Bestimmung seiner Abweichung von der Vertikalen ausgestattet ist. Das Messsignal eines solchen elektronischen Neigungsmessers wird dazu verwendet, Fehler des Wägeergebnisses neigungsabhängig zu kompensieren und somit auch bei nicht exakt ausgerichteter Waage, insbesondere im Fall einer lastabhängigen Neigung der Waage, ein richtiges Wägeresultat zu erzielen.

In der JP-61-108927-A2 ist eine Waage mit einem elektronischen Neigungssensor offenbart, der aus einem mit einer elektrisch leitfähigen Flüssigkeit teilweise gefüllten Behälter mit einer Luftblase besteht, wobei eine Schräglage über die Veränderung des elektrischen Widerstands detektiert wird und einen akustischen Alarm auslöst, wenn die Waage zu stark geneigt ist.

Die FR-2 639 111-A1 beschreibt eine Neigungskontrollvorrichtung für eine Waage, die Schräglagen in X- und Y-Richtung auch selektiv detektieren kann. Diese Neigungskontrollvorrichtung weist mindestens einen Neigungssensor, einen elektrischen Schaltkreis mit elektrischem Versorgungsteil für den Neigungssensor sowie ein Relais auf, wobei letzteres gemäss vorgegebener Grenzen der Neigung, das System veranlasst, die Wägung zu blockieren. Alternativ kann auch die Anzeige des Wägeresultats oder dessen Weitergabe an Peripheriegeräte blockiert werden. Ausserdem kann über Leuchtdioden der Neigungszustand der Waage sowie die Richtung der Schräglage angezeigt werden.

Es ist, vor allem bei qualitätsrelevanten Wägevorgängen, vorgeschrieben zuerst die Schräglage der Waage durch einen Blick auf die Libelle zu kontrollieren, bevor der eigentliche Wägevorgang stattfindet. In der Praxis geschieht dies jedoch nicht immer regelmässig. Stellt nun ein Benutzer zu irgend einem Zeitpunkt fest, dass sich die Waage nicht mehr in ihrer Bezugslage befindet, so stellt sich für ihn die Frage, ob die Abweichung relevant ist, das heisst wie gross die Soll/Ist-Abweichung ist, wie lange dieser Abweichungszustand bereits besteht und danach ist abzuklären, wie gross die möglichen Auswirkungen sind.

Wenn bei einer Waage, deren Neigung vorgegebene Grenzen überschreitet, ein Alarm ausgelöst wird, ist für den Benutzer der Waage auch in einem solchen Fall nicht unbedingt ersichtlich, seit welchem Zeitpunkt die Waage gegenüber ihrer Bezugslage geneigt ist und auf welche Weise es zu der Neigung gekommen ist. Im Sinne einer "Good Laboratory Practice" (GLP) ist jedoch die Nachvollziehbarkeit der Verlässlichkeit des Wägeergebnisses unumgänglich. Daher muss der Zeitpunkt zugänglich sein, ab dem das Wägeergebnis nicht mehr verlässlich war. Eine automatische Korrektur des Wägeergebnisses hinsichtlich eines elektronisch erfassten Neigungszustandes der Waage ist nicht immer wünschbar, da die Neigung sich gegebenenfalls weit über einen vertretbaren Grenzwert hinaus unbemerkt fortsetzen könnte.

Es ist daher Aufgabe der Erfindung einem Benutzer eines gravimetrischen Messgeräts, insbesondere einer Waage, eine Kontrollmöglichkeit zu eröffnen, mit der er stets über den Betriebszustand des Messgeräts, beziehungsweise der Waage, insbesondere hinsichtlich der Neigung, informiert ist.

Diese Aufgabe wird durch die Merkmale des Anspruchs 1 gelöst. In einer Vorrichtung zur Betriebszustandsüberwachung für ein gravimetrisches Messgerät, insbesondere eine Waage mit einer Wägezelle, mit einer eine Signalverarbeitungseinrichtung, eine Speichereinrichtung sowie einen Zeitgeber aufweisenden Wägeelektronik, mit einer Ausgabeeinheit sowie mindestens einem elektronischen Neigungssensor, welcher in Kommunikationsverbindung mit der Signalverarbeitungseinrichtung steht, weist die Signalverarbeitungseinrichtung Mittel zur Ermittlung einer den Betriebszustand der Waage kennzeichnenden Grösse aus einem Signal des mindestens einen elektronischen Neigungssensors, sowie Mittel zur Zuordnung einer Zeitgrösse zu der den Betriebszustand der Waage kennzeichnenden Grösse und Mittel zum Übermitteln und Ablegen der entstehenden Wertevektoren in die Speichereinrichtung auf, wobei die Wertevektoren jederzeit für eine Weitergabe an eine Ausgabeeinheit zur Verfügung stehen.

Die Neigung einer Waage ist als messtechnisch relevanter Betriebsparameter zu betrachten, welcher einer elektronischen Abfrage von aussen stets zugänglich sein sollte. Diese Situation wird durch die erfindungsgemässe Vorrichtung einer Waage mit einem elektronischen Neigungssensor, welcher den Betriebszustand, insbesondere hinsichtlich der Neigung der Waage, aufzeichnet, geschaffen. Der Benutzer erhält eine unmittelbare Rückmeldung über den Betriebszustand der Waage, sowie ein dokumentierbares Resultat, auf welches er auch zu einem späteren Zeitpunkt jederzeit wieder zugreifen kann.

Eine den Betriebszustand der Waage kennzeichnende Grösse kann nun laufend über die Ausgabeeinheit als Funktion der Zeit ausgegeben oder es kann eine den aktuellen Betriebszustand der Waage kennzeichnende Grösse ausgegeben werden. Bevorzugt wird aber die den Betriebszustand der Waage kennzeichnende Grösse als Funktion der Zeit in einem Historienfile im Speicher abgelegt, von wo sie jederzeit abrufbar ist und beispielsweise auf einem Drucker ausgedruckt werden kann.

Der Vorteil einer solchen Historienaufzeichnung und Ausgabe des Betriebszustandes, insbesondere eines Neigungswertes, besteht darin, dass die Verlässlichkeit des Wägeresultats nachvollziehbar ist.

In einer bevorzugten Ausgestaltung der Erfindung erfolgt eine Abfrage des Signals des mindestens einen elektronischen Neigungssensors sowie das Abspeichern einer den Betriebszustand der Waage kennzeichnenden Grösse in regelmässigen, insbesondere modifizierbaren, Zeitintervallen. Bei Vorhandensein einer Kalibriervorrichtung in der Waage findet eine Abfrage des Neigungs-Signals sowie das Abspeichern einer den Betriebszustand der Waage kennzeichnenden Grösse nach jeder automatischen Kalibriermessung statt. Auch ist es wünschenswert diese Grösse jedes Mal dann abzufragen und abzuspeichem, wenn die Waage eingeschaltet wird.

In einer vorteilhaften Weiterbildung der erfindungsgemässen Vorrichtung verfügt die Signalverarbeitungseinrichtung über Mittel zur Zuordnung von Grenzen, insbesondere Warn- und/oder Eingreifgrenzen, zu einer den Betriebszustand der Waage kennzeichnenden Grösse, wobei diese zusammen mit der den Betriebszustand der Waage kennzeichnenden Grösse an die Ausgabeeinheit übermittelt und dort ausgegeben werden. Diese Grenzwerte sind über eine Eingabeeinheit modifizierbar. Bei Erreichen eines Grenzwerts, beispielsweise der Warngrenze, wird ein akustisches und/oder optisches Warnsignal an der Ausgabeeinheit ausgegeben. Bei Erreichen der Eingreifgrenze wird die Wägeresultatsanzeige verändert, das heisst die Anzeige der Waage wird auf nicht aktive Darstellung umgeschaltet oder im Falle eines verwendeten Farbdisplays wechselt die Farbe der Resultatsanzeige. Alternativ kann auch jede weitere Wägung blockiert werden. Auch kann ein Grenzwert dergestalt definiert werden, dass bei Erreichen desselben eine automatische Kalibrierung ausgeführt wird.

Eine andere Weiterbildung der Erfindung sieht vor, dass eine beispielsweise motorisch angetriebene Neigungskorrektur-Vorrichtung vorhanden ist, die bei Erreichen eines Grenzwertes eine automatische Neigungskorrektur ausführt, wodurch das gravimetrische Messgerät in seine Bezugslage zurückgeführt wird.

In einer besonders bevorzugten Ausgestaltung der erfindungsgemässen Vorrichtung ist an der Ausgabeeinheit eine Nivellierhilfe anzeigbar, mittels derer das Einrichten des gravimetrische Messgerät in seine Bezugslage unterstützt wird, wobei die Nivellierhilfe beispielsweise auf die zu betätigende Verstelleinheit und deren Drehrichtung hinweist.

Die Erfindung wird anhand einer mit einem Neigungssensor versehenen Waage sowie eines Verfahrens zur erfindungsgemässen Verwendung einer solchen Vorrichtung im folgenden in den stark schematisierten Zeichnungen dargestellt. Es zeigen:
- Figur 1: eine Waage in einer dreidimensionalen Darstellung,
- Figur 2: eine Sicht in den Bodenraum einer Waage mit installiertem Neigungssensor,
- Figur 3: ein Blockschaltbild zum Zusammenwirken einzelner Komponenten der Waage für eine Historienaufzeichnung,
- Figur 4: ein Blockschaltbild des Neigungssensors und seiner Kommunikation mit der Signalverarbeitungseinrichtung der Waage,
- Figur 5: ein Ablaufdiagramm für verschiedene Moden des Einschreibens eines zeitabhängigen Neigungswertes in das Historienfile des Speichers,
- Figur 6: eine Darstellung einer Anzeige mit einer Einstellhilfe für ein manuelles Nivellieren der Waage,
- Figur 7: eine vergrösserte Darstellung der Einstellhilfe aus Figur 6.

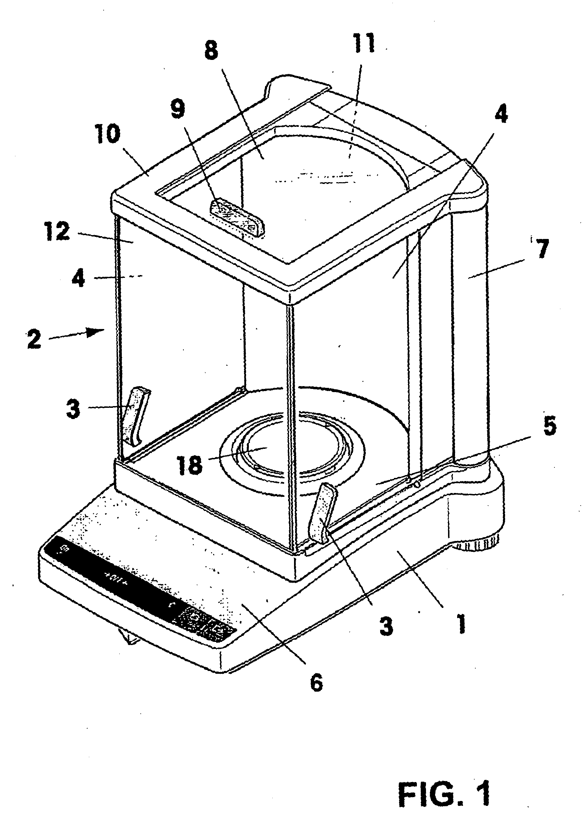

Die Figur 1 zeigt eine Waage mit einem Waagengehäuse 1, welches direkt mit einer Anzeige- und Bedieneinheit 6 verbunden ist. Im Waagengehäuse 1 sind die hier nicht sichtbare Wägezelle und die Wägeelektronik untergebracht. Eine Waagschale 18 ist durch eine Durchführung im Boden 5 des Wägeraums 2 mit der Wägezelle verbunden. Der Wägeraum 2 ist von einem Windschutz umgeben, welcher aus einer Frontwand 12, zwei an Griffen 3 zum Öffnen und Schliessen des Wägeraums 2 verschiebbaren Seitenscheiben 4, sowie einer Abdeckung 10 besteht. Die Abdeckung 10 weist ebenfalls eine an einem Griff 9 verschiebbare Abdeckscheibe 8 auf. Der Wägeraum 2 wird ausserdem durch eine Rückwand 11 begrenzt, welche Bestandteil eines rückwärtigen Gehäuseraums 7 ist.

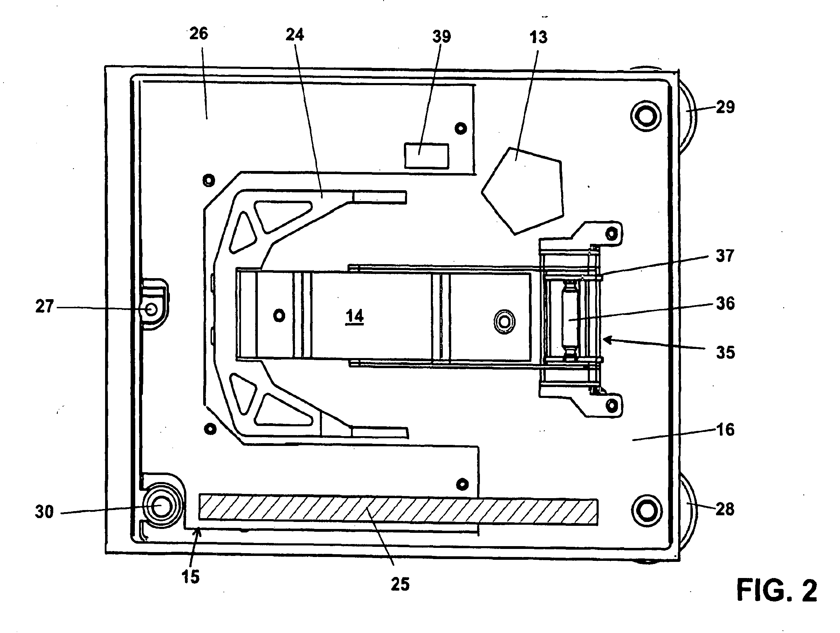

Die Figur 2 zeigt stark schematisiert eine Sicht von oben in den Bodenraum des Waagengehäuses 1. Für die Erfindung nicht wesentliche Bauteile sind in der Zeichnung weggelassen worden. Die Wägezelle 14 ist an einer fest mit dem Gehäuseboden verbundenen U-förmigen Halterung 24 befestigt. Die Wägeelektronik 15 ist auf einer stehenden Platine 25 und einer liegenden Platine 26 untergebracht. Ein elektronischer Neigungssensor 13 ist vorzugsweise nahe der Wägezelle 14 auf dem Gehäuseboden 16 befestigt, da die Wägezelle 14 das auf eine Neigung der Waage empfindlich reagierende Element ist. Es ist selbstverständlich, dass der Gehäuseboden 16 eine möglichst ebene Oberfläche aufweist. Der Neigungssensor 13 kann auch auf der Platine 26 der Wägeelektronik 15 angebracht sein, solange gewährleistet ist, dass diese sich in einer definierten Ausrichtung bezüglich der Wägezelle 14 befindet. Der Neigungssensor 13 ist bevorzugt ein zweiachsiger Sensor, so dass auch die Richtung der Neigung ermittelt werden kann. Die Waage steht auf drei Füssen 27, 28, 29, wobei vom Fuss 27 nur die Befestigung an dem Gehäuseboden 16 erkennbar ist. Die beiden in der Zeichnung rechts dargestellten Füsse 28, 29 sind mit einer Nivelliereinrichtung, das heisst mit Schrauben zum Ausrichten der Waage in ihre Bezugslage, versehen. Mit dem Bezugszeichen 30 ist eine Libelle gekennzeichnet, welche der Sichtkontrolle der Nivellierung der Waage dient. Weiterhin zeigt die Figur 2 eine Kalibriervorrichtung 35 mit einem Kalibriergewicht 36, welches für eine Kalibriermessung auf eine Auflage 37, die an einer Hebelverlängerung 38 der Wägezelle angebracht ist, aufgelegt werden kann.

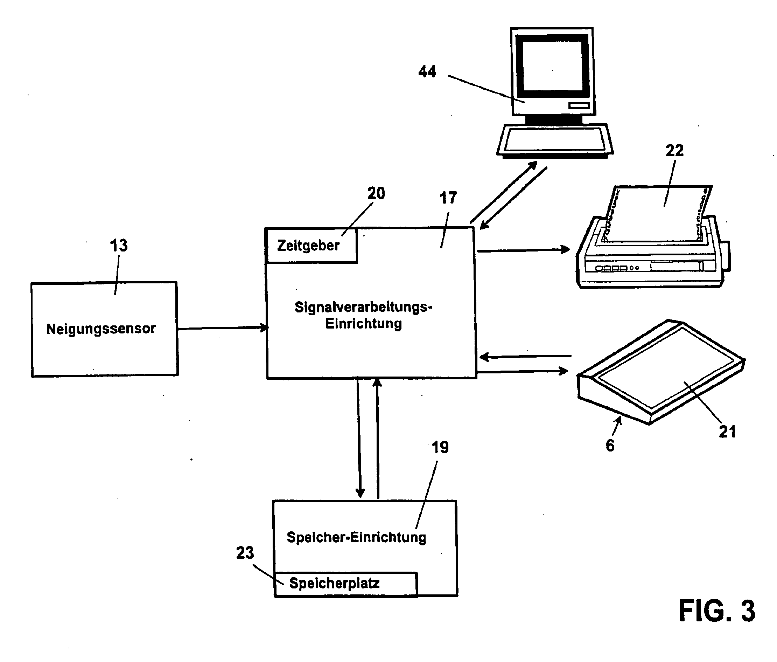

Die Figur 3 zeigt ein Blockschaltbild, aus welchem deutlich wird, in welcher Weise die einzelnen Komponenten der Waage zur Erzeugung einer Historienaufzeichnung des Betriebszustandes, insbesondere bezüglich der Neigung der Waage, sowie einer Darstellung des aktuellen Neigungszustandes zusammenwirken. Der elektronische Neigungssensor 13 ermittelt laufend ein neigungsabhängiges Signal. Dieses wird, beispielsweise auf eine ereignisgesteuerte Abfrage, an die Signalverarbeitungseinrichtung 17 übermittelt. Dieses Signal wird, sofern es sich um einen zweiachsigen Neigungssensor 13 oder alternativ zwei individuellen Neigungssensoren handelt, als eine einen Vektor bildende numerische Grösse zur Signalverarbeitungseinrichtung 17 gelangen. Dort wird dem Neigungssignal ein von einem Zeitgeber 20, welcher vorzugsweise in die Signalverarbeitungseinheit 17 integriert ist, kommender Zeitwert zugeordnet und die Vektorgrösse, bestehend aus einem Zeitwert und zwei Neigungswerten, wird nun an die Speichereinrichtung 19 weitergeleitet, wo sie an einem dafür vorgesehenen Speicherplatz 23 abgelegt wird. Dabei werden aufeinander folgende Neigungswerte in einer zeitlichen Reihenfolge, einem sogenannten Historienfile, abgelegt. Dieses Historienfile kann nun zu jeder Zeit von der Signalverarbeitungseinheit 17 wieder abgerufen werden und beispielsweise auf einem an der Waage angeschlossenen Drucker 22 ausgegeben werden. Ebenso kann auch das aktuelle Neigungssignal und/oder ein Neigungssignal als Funktion der Zeit graphisch auf einer Anzeige 21 der Anzeige- und Bedieneinheit 6 dargestellt werden. Alternativ können die das Historienfile bildenden Werte auch einem externen Prozessor- und Speichersystem, beispielsweise einem Labor-Informations-Management-System (LIMS) 44 zugeleitet werden.

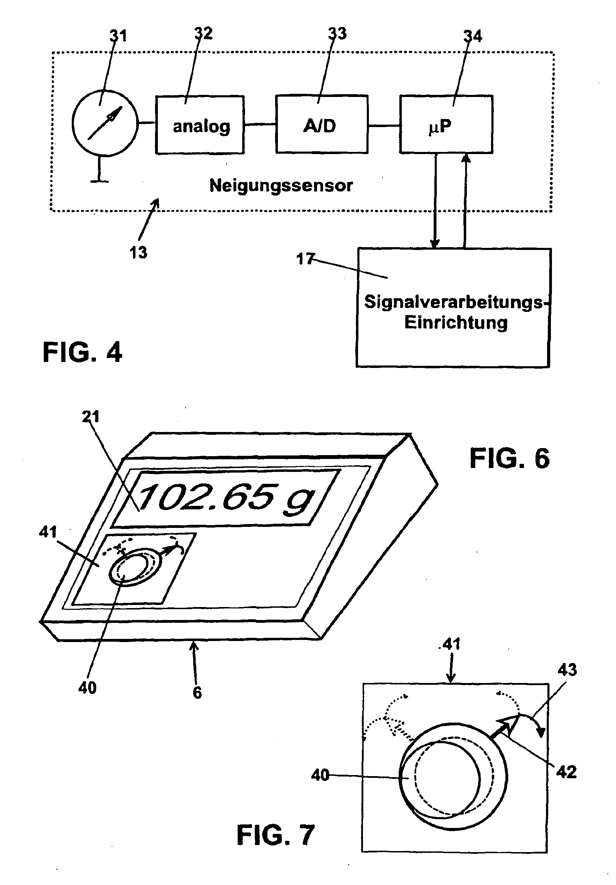

Wie in der Figur 4 schematisch dargestellt ist, setzt sich der Neigungssensor 13 aus einem Sensorelement 31 und elektronischen Komponenten zur Verarbeitung des Sensorsignals zusammen, bestehend aus einer analogen Filter- und Verstärkereinheit 32, einem Analog-Digital-Wandler 33 sowie einem Mikroprozessor 34. Letzterer steht in Kommunikationsverbindung mit der Signalverarbeitungseinheit 17 der Wägeelektronik 15. Der Neigungssensor 13 bildet somit eine unabhängige Einheit, welche das aktuelle Neigungssignal laufend ermittelt und im Mikroprozessor 34 verfügbar hält. Dieses Signal kann somit jederzeit vom Prozessor der Signalverarbeitungseinrichtung 17 der Waage abgefragt werden.

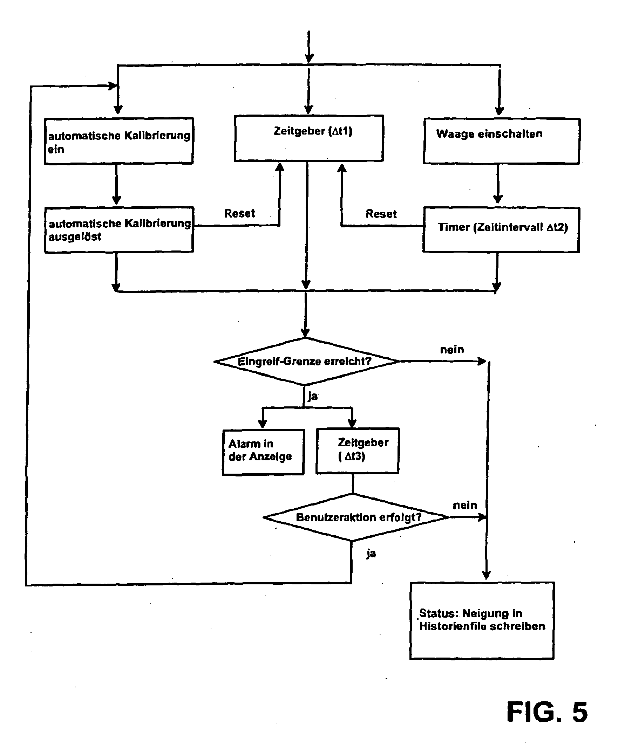

Ein Beispiel für das Zusammenwirken verschiedener Abfragemodi zeigt die Figur 5 in einem Ablaufdiagramm. Die Abfrage des Neigungssignals erfolgt zunächst in regelmässigen Zeitintervallen Δt1. Diese können vom Benutzer vorgegeben werden, beispielsweise über eine Eingabe an der Anzeige- und Bedieneinheit 6 (siehe Figuren 1 und 3). Nach Ablauf eines vorgegebenen und vom Zeitgeber 20 gemessenen Zeitintervalls Δt1 erfolgt von der Signalverarbeitungseinrichtung 17 eine Abfrage des Neigungssignals am Mikroprozessor 34 und das Signal wird zusammen mit dem Zeitpunkt seiner Abfrage im Speicherplatz 23 des Speichers 19 abgelegt.

Es kann sich nun auch ergeben, dass in der Signalverarbeitungseinrichtung 17 Ereignisse festgestellt werden, die zu einer vorzeitigen Abfrage des Neigungssignals Anlass geben. Dies kann eine automatisch erfolgte Kalibriermessung mittels einer in der Waage eingebauten Kalibriervorrichtung 35 (siehe Figur 2) sein. Die automatische Kalibriermessung findet beispielsweise dann statt, wenn ein ebenfalls in der Waage eingebauter Temperatursensor 39 eine über einen vorgegebenen Wert hinaus reichende Temperaturänderung misst, welche von der Signalverarbeitungseinrichtung 17 registriert wird. In diesem Falle wird das Neigungssignal mit dem aktuellen Zeitwert ebenfalls im Speicherplatz 23 des Speichers 19 abgelegt. Daraufhin wird der Zeitgeber 20 für die Messung des Zeitintervalls Δt1 bis zur nächsten Neigungssignal-Abfrage auf den Wert Null zurückgesetzt.

Auch nach dem Einschalten der Waage kann eine Abfrage des Neigungszustandes der Waage vorgesehen werden. Diese erfolgt vorzugsweise nach einer gewährten Aufwärmzeit Δt2 von wenigen Minuten, welche beispielsweise vom Zeitgeber 20 zur Verfügung gestellt wird. Auch in diesem Falle wird der Zeitgeber 20 für die Messung des Zeitintervalls Δt1 bis zur nächsten Neigungssignal-Abfrage auf den Wert Null zurückgesetzt.

In einer weiteren in den Figuren nicht gezeigte Betriebs-Variante des Neigungssensors ist der Mikroprozessor 34 mit einer Vergleichseinheit versehen, die beispielsweise aufeinander folgende Werte des neigungsabhängigen Signals miteinander vergleicht und bei Neigungsdifferenzen, die eine vorgegebene Grösse überschreiten, automatisch den aktuellen Neigungswert an die Signalverarbeitungseinrichtung 17 weiterleitet, wo diesem ein Zeitwert von einem kontinuierlich arbeitenden Zeitgeber (einer Uhr) zugeordnet wird und in einem Speicherplatz 23 der Speichereinrichtung 19 abgelegt wird.

In jeder der beschriebenen Ablaufvarianten wird dem neigungsabhängigen Signal ein Zeitsignal zugeordnet und das Wertepaar, beziehungsweise der Wertevektor in ein Historienfile in der Speichereinrichtung 19 der Wägeelektronik eingeschrieben. Das Historienfile ist jederzeit über eine Ausgabevorrichtung, sei dies ein Drucker oder eine Anzeige-Einheit ausgebbar, sei dies durch Drücken einer bestimmten Funktionstaste oder durch Eingabe eines Befehls auf der Anzeige- und Bedieneinheit. Auch ist es denkbar, durch ein einfaches Symbol, beispielsweise den Begriff "ok" den ordnungsgemässen Betriebszustand der Waage ständig auf der Anzeige auszugeben. Bei den Daten, welche der Neigungssensor 13 an die Signalverarbeitungseinrichtung 17 sendet, muss es sich selbstverständlich nicht unbedingt um Wertepaare handeln, es könnte auch ein Signal sein, welches lediglich angibt, ob der Neigungszustand der Waage innerhalb vorgegebener Grenzen, oder ausserhalb derer liegt, die Waage also für ein Weiterarbeiten geeignet oder nicht geeignet ist.

Die Ausgabe des zeitabhängigen Neigungszustandes kann nun auch mit der Angabe von Grenzwerten versehen sein. Es kann sich dabei um sogenannte Warn- und/oder Eingreifgrenzwerte handeln. Ist ein Warngrenzwert erreicht, wird ein Benutzer der Waage darüber informiert, dass diese dazu tendiert aus ihrer Bezugslage zu geraten. Ist der Eingreifgrenzwert erreicht, so ist der Benutzer gefordert, die Waage mittels der Nivelliereinrichtung wieder in ihre Bezugslage zu bringen. Die Darstellung des Erreichens der jeweiligen Grenzwerte, kann auf der Anzeige beispielsweise durch drei Leuchtdioden erfolgen, wobei eine grüne Leuchtdiode bei einer Neigung der Waage innerhalb der vorgegebenen Toleranz aufleuchtet, eine gelbe, wenn die Wamgrenze überschritten ist und eine rote bei Überschreiten der Eingreifgrenze. Im letzteren Fall kann ein akustisches Warnsignal ausgegeben werden und/oder die Waagenanzeige gibt blinkende Wägewerte aus oder schaltet sich ab.

In einer solchen Situation ist ein Einschreiben des aktuellen Betriebszustandes der Waage in das Historienfile erforderlich, wie in der Figur 5 zu sehen ist. Dies kann nach einem kurzen Zeitintervall Δt3 erfolgen, während der einem Benutzer die Möglichkeit gewährt wird, die Waage beispielsweise zu nivellieren, d.h. in ihre Bezugslage zurück zu bringen. Erfolgt keine solche Aktion, wird die aktuelle Neigung der Waage im Historienfile abgelegt. Erfolgt eine Aktion, so wird in der Waage eine Kalibrierung ausgelöst und anschliessend, nach erfolgter Abfrage, ob die Eingreifgrenze erreicht ist, die aktuelle Neigung der Waage im Historienfile abgelegt, falls die Grenze nicht erreicht wird. Ist die Grenze nach wie vor erreicht oder gar überschritten, so wird wiederum ein Alarm ausgelöst und wie oben in diesem Abschnitt beschrieben weiter verfahren, wobei die Prozedur mehrfach zyklisch durchlaufen werden kann.

Eine graphische Darstellung des Neigungszustandes der Waage auf der Anzeige kann nun auch dergestalt erfolgen, dass beispielsweise ein Neigungswert quantitativ auf einem horizontal oder auch vertikal angeordneten Balken repräsentiert wird. Das Erreichen oder Überschreiten von Grenzwerten kann entweder durch Blinken oder im Falle der Verwendung einer Farbanzeige wiederum durch die Farben grün, gelb und rot repräsentiert werden.

Da eine solche Darstellung des Neigungswertes immer nur einen einzigen Zahlenwert erfordert, wird dieser bevorzugt aus der Wurzel aus der Summe der Neigungswertquadrate für die jeweils gemessene Richtung errechnet.

Eine graphische Darstellung der Neigungswerte der Waage kann insbesondere auch dazu verwendet werden, eine aus der Bezugslage herausgeratenen Waage zu nivellieren. Die Nivellierung erfolgt dabei bevorzugt von Hand, indem beispielsweise zwei Füsse 28, 29 der Waage durch verdrehen an einem Schraubmechanismus in ihrer Höhe verstellt werden. Wie in der Figur 6 gezeigt wird, kann auf der Anzeige- und Bedieneinheit 6, beispielsweise mit Hilfe einer Pixel-Anzeige, eine Libelle 40 elektronisch, dargestellt werden, woraus ein Benutzer der Waage sofort entnehmen kann, wie stark die Waage aus ihrer Bezugslage geraten ist. Insbesondere kann durch Blinken der Libelle 40 noch zusätzlich das Erreichen eines Grenzwertes, beispielsweise der Wamgrenze verdeutlicht werden.

In Verbindung mit der elektronisch dargestellten Libelle 40 lässt sich eine Nivellierhilfe 41 realisieren, die eine Hilfestellung gibt, in welche Richtung beispielsweise welcher Fuss 28, 29 zu drehen ist, um die Ausrichtung der Waage wieder in ihre Bezugslage zu bringen. In der Figur 7, die die Nivellierhilfe 41 aus Figur 6 zeigt, gibt ein Pfeil 42, der in die Richtung eines verstellbaren Fusses zeigt, an, dass an diesem zu drehen ist und der gebogene Pfeil 43 lässt die Drehrichtung erkennen. Die für die aktuelle Handlung erforderlichen Pfeile 42, 43 sind jeweils ausgeleuchtet, wohingegen die übrigen Pfeile (in der Figur gestrichelt gezeichnet) auf der Anzeige nicht in Erscheinung treten. Mit einer solchen Nivellierhilfe 41 ist ein einfaches und rasches Nivellieren möglich, auch für vergleichsweise wenig geübte Benutzer einer Waage.

Selbstverständlich sind auch für eine Nivellierhilfe eine Vielzahl von Möglichkeiten der Realisierung gegeben. Auch trägt eine motorische Nivellierung, beispielsweise ausgelöst durch eine Bedientaste der Anzeige- und Bedieneinheit 6 dem Erfindungsgedanken Rechnung.

Ein Historienfile muss nun nicht ausschliesslich auf die Ausgabe der Neigungswerte der Waage beschränkt sein, sondern kann darüber hinaus weitere Parameter der Waage angeben, wie beispielsweise die Temperatur oder auch Ereignisse, wie eine erfolgte Kalibrierung festhalten.

### Bezugszeichenliste

- 1: Waagengehäuse
- 2: Wägeraum
- 3: Griff
- 4: Seitenscheibe
- 5: Boden
- 6: Anzeige- und Bedieneinheit
- 7: Rückwärtiger Gehäuseraum
- 8: Abdeckscheibe
- 9: Griff
- 10: Abdeckung
- 11: Rückwand
- 12: Frontwand
- 13: Neigungssensor
- 14: Wägezelle
- 15: Wägeelektronik
- 16: Gehäuseboden
- 17: Signalverarbeitungseinrichtung
- 18: Waagschale
- 19: Speichereinrichtung, Speicher
- 20: Zeitgeber
- 21: Anzeige
- 22: Drucker
- 23: Speicherplatz
- 24: U-förmige Halterung
- 25: Platine
- 26: Platine
- 27: Fuss
- 28: Fuss
- 29: Fuss
- 30: Libelle
- 31: Sensorelement
- 32: Analoge Filter- und Verstärkereinheit
- 33: Analog-Digital-Wandler
- 34: Mikroprozessor
- 35: Kalibriervorrichtung
- 36: Kalibriergewicht
- 37: Auflage
- 38: Hebelverlängerung
- 39: Temperatursensor
- 40: Elektronisch dargestellte Libelle
- 41: Nivellierhilfe
- 42: Pfeil
- 43: Gebogener Pfeil
- 44: LIMS-System

## Patentansprüche

1. Vorrichtung zur Betriebszustandsüberwachung für ein eine Waage mit einer Wägezelle aufweisendes gravimetrisches Meßgerät, mit einer eine Signalverarbeitungseinrichtung (17), eine Speichereinrichtung (19) sowie einen Zeitgeber (20) aufweisenden Wägeelektronik (15), mit einer Ausgabeeinheit (21, 22, 44) sowie mindestens einem elektronischen Neigungssensor (13), welcher in Kommunikationsverbindung mit der Signalverarbeitungseinrichtung (17) steht, **dadurch gekennzeichnet, daß** die Signalverarbeitungseinrichtung (17) Mittel zur Ermittlung einer den Betriebszustand der Waage kennzeichnenden Größe aus einem von dem mindestens einen elektronischen Neigungssensor (13) laufend ermittelten neigungsabhängigen Signal, sowie Mittel zur Zuordnung einer Zeitgröße zu der den Betriebszustand der Waage kennzeichnenden Größe und Mittel zum Übermitteln und Ablegen der entstehenden, die den Betriebszustand der Waage kennzeichnende Größe als Funktion der Zeit darstellenden Wertevektoren in die Speichereinrichtung (19) aufweist, wobei die Wertevektoren jederzeit für eine Weitergabe an eine Ausgabeeinheit (21, 22, 44) zur Verfügung stehen.

2. Vorrichtung nach Anspruch 1, **dadurch gekennzeichnet, dass** die Ausgabeeinheit (21, 22, 44) Mittel zur laufenden Ausgabe einer den aktuellen Betriebszustand der Waage kennzeichnenden Grösse aufweist.

3. Vorrichtung nach Anspruch 1, oder 2 , **dadurch gekennzeichnet, dass** die den Betriebszustand der Waage kennzeichnenden Grössen als Funktion der Zeit in einem Historienfile in der Speichereinrichtung (19) abgelegt sind und jederzeit abrufbar sind.

4. Vorrichtung nach Anspruch 3, **dadurch gekennzeichnet, dass** ein Drucker (22) und/oder eine Anzeige (21) und/oder eine externe Prozessor- und Speichereinheit, an das gravimetrische Messgerät anschliessbar sind für die Ausgabe eines Historienfiles.

5. Vorrichtung nach einem der Ansprüche 1 bis 4, **dadurch gekennzeichnet, dass** eine Abfrage des Signals des mindestens einen elektronische Neigungssensors (13) sowie das Abspeichern einer den Betriebszustand der Waage kennzeichnenden Grösse in regelmässigen, insbesondere modifizierbaren, Zeitintervallen erfolgt.

6. Vorrichtung nach einem der Ansprüche 1 bis 5, **dadurch gekennzeichnet, dass** eine Kalibriervorrichtung (35) vorhanden ist, und dass eine Abfrage des Signals des mindestens einen elektronischen Neigungssensors (13) sowie das Abspeichern einer den Betriebszustand der Waage kennzeichnenden Grösse nach jeder Kalibriermessung erfolgt.

7. Vorrichtung nach einem der Ansprüche 1 bis 6, **dadurch gekennzeichnet, dass** eine Abfrage des Signals des mindestens einen elektronischen Neigungssensors (13) sowie das Abspeichern einer den Betriebszustand der Waage kennzeichnenden Grösse nach jedem Einschalten der Waage erfolgt.

8. Vorrichtung nach einem der Ansprüche 1 bis 7, **dadurch gekennzeichnet, dass** die Signalverarbeitungseinrichtung (17) oder der Neigungssensor (13) über Mittel zur Zuordnung von Grenzen, insbesondere Warn- und/oder Eingreifgrenzen, zu einer den Betriebszustand der Waage kennzeichnenden Grösse verfügt, wobei diese zusammen mit der den Betriebszustand der Waage kennzeichnenden Grösse an die Ausgabeeinheit (21, 22, 44) übermittelt und dort ausgegeben werden.

9. Vorrichtung nach Anspruch 8, **dadurch gekennzeichnet, dass** die Grenzen über eine Eingabeeinheit (6) modifizierbar sind.

10. Vorrichtung nach Anspruch 8 oder 9, **dadurch gekennzeichnet, dass** beim Erreichen eines Wamgrenzwerts ein akustisches und/oder optisches Warnsignal an der Ausgabeeinheit (21, 22, 44) ausgegeben wird.

11. Vorrichtung nach einem der Ansprüche 8 bis 10, **dadurch gekennzeichnet, dass** beim Erreichen eines Eingreifgrenzwerts die Wägeresultatsanzeige verändert wird.

12. Vorrichtung nach einem der Ansprüche 8 bis 11, **dadurch gekennzeichnet, dass** beim Erreichen eines Eingreifgrenzwerts jede weitere Wägung blockiert wird.

13. Vorrichtung nach einem der Ansprüche 8 bis 12, **dadurch gekennzeichnet, dass** eine Kalibriervorrichtung vorhanden ist, welche bei Erreichen eines Grenzwertes eine automatische Kalibrierung ausführt.

14. Vorrichtung nach einem der Ansprüche 8 bis 13, **dadurch gekennzeichnet, dass** eine motorisch antreibbare Neigungskorrektur-Vorrichtung vorhanden ist, die bei Erreichen eines Grenzwertes eine automatische Neigungskorrektur ausführt, wodurch das gravimetrische Messgerät in seine Bezugslage zurückgeführt wird.

15. Vorrichtung nach einem der Ansprüche 1 bis 14, **dadurch gekennzeichnet, dass** an der Ausgabeeinheit eine Nivellierhilfe (41) anzeigbar ist, mittels derer das Einrichten des gravimetrischen Messgeräts in seine Bezugslage unterstützt wird.

16. Vorrichtung nach Anspruch 15, **dadurch gekennzeichnet, dass** die Nivellierhilfe (41) auf die zu betätigende Verstelleinheit und deren Drehrichtung hinweist.

17. Waage mit einer Vorrichtung nach einem der Ansprüche 1 bis 16.

## Claims

1. Device for monitoring an operating condition of a gravimetric measuring instrument comprising a balance with a weighing cell, with an electronic weighing circuit arrangement (15) comprising a signal-processing device (17), a memory device (19) as well as a time clock (20), further with an output unit (21, 22, 44) as well as at least one electronic inclination sensor (13) that is connected for communication with the signal-processing device (17), **characterized in that** the signal-processing device (17) comprises means whereby a quantity that is indicative of the operating condition of the balance is determined from a continuously generated inclination-dependent signal of the at least one electronic inclination sensor (13), the signal-processing device (17) further comprises means whereby a time-related quantity is assigned to the quantity that is indicative of the operating condition, and also comprises means whereby the resultant vector-like sets of values, which represent the quantity that is indicative of the operating condition of the balance as a function of time, are transmitted to and stored in the memory device (19), so that the vector-like sets of values are at all times available for transmission to an output unit (21, 22, 44).

2. Device according to claim 1, **characterized in that** the output unit (21, 22, 44) comprises means for a continuous delivery of a quantity that is indicative of the current operating condition of the balance.

3. Device according to claim 1 or 2, **characterized in that** the quantities that are indicative of the operating condition of the balance are stored as a function of time in a history file in the memory device (19) and are retrievable at all times.

4. Device according to claim 3, **characterized in that** a printer (22) and/or a display (21) and/or an external processor- and memory unit can be connected to the gravimetric measuring instrument to produce an output of a history file.

5. Device according to one of the claims 1 to 4, **characterized in that** an interrogation of the signal of the at least one electronic inclination sensor (13) as well as the storing of a quantity that is indicative of the operating condition of the balance occurs at regular time intervals, more specifically at regular time intervals whose length is modifiable.

6. Device according to one of the claims 1 to 5, **characterized in that** a calibration device (35) is provided and that an interrogation of the signal of the at least on electronic inclination sensor (13) as well as the storing of a quantity that is indicative of the operating condition of the balance occurs after every calibration measurement.

7. Device according to one of the claims 1 to 6, **characterized in that** an interrogation of the signal of the at least on electronic inclination sensor (13) as well as the storing of a quantity that is indicative of the operating condition of the balance occurs each time the balance is switched on.

8. Device according to one of the claims 1 to 7, **characterized in that** the signal-processing device (17) or the inclination sensor (13) includes means for assigning limits, in particular warning limits and/or intervention limits, to a quantity that is indicative of the operating condition of the balance, wherein said limits are transmitted together with said indicative quantity to the output unit (21, 22, 44) where said limits and indicative data are delivered as output.

9. Device according to claim 8, **characterized in that** the limits can be modified by way of an input unit (6).

10. Device according to claim 8 or 9, **characterized in that** upon reaching a warning limit value, an acoustical and/or optical warning signal is given by the output unit (21, 22, 44).

11. Device according to one of the claims 8 to 10, **characterized in that** upon reaching an intervention limit, the indication of the weighing result is changed.

12. Device according to one of the claims 8 to 11, **characterized in that** upon reaching an intervention limit, any further weighing is blocked.

13. Device according to one of the claims 8 to 12, **characterized in that** a calibration device is provided which performs an automatic calibration when a limit is reached.

14. Device according to one of the claims 8 to 13, **characterized in that** a level-adjusting device is provided which can be driven by a motor and which automatically corrects an out-of-level condition when a limit value is reached, whereby the gravimetric measuring instrument is returned to its reference position.

15. Device according to one of the claims 1 to 14, **characterized in that** a leveling guide (41) can be visually displayed on the output unit as a means of assisting a user in setting the gravimetric measuring instrument to its reference position.

16. Device according to claim 15, **characterized in that** the leveling guide (41) points to the adjustment unit that needs to be actuated and shows the sense of rotation for the adjustment.

17. Balance with a device according to one of the claims 1 to 16.

## Revendications

1. Dispositif destiné à contrôler l'état de service pour un appareil de mesure par gravimétrie comprenant une balance avec une cellule de pesée, une électronique de pesée (15) présentant un dispositif de traitement de signal (17), un dispositif de mémorisation (19) et un minuteur (20), une unité de sortie (21, 22, 44) et au moins un capteur d'inclinaison (13) électronique, qui est en liaison de communication avec le dispositif de traitement de signal (17), **caractérisé en ce que** le dispositif de traitement de signal (17) présente des moyens pour déterminer une grandeur caractérisant l'état de service de la balance à partir d'un signal étant déterminé en permanence et dépendant de l'inclinaison du au moins un capteur d'inclinaison (13) électronique, et des moyens pour attribuer une grandeur de temps à la grandeur caractérisant l'état de service de la balance, et des moyens pour transmettre et déposer les vecteurs de valeurs résultants, qui représentent la grandeur caractérisant l'état de service de la balance en fonction de temps, dans le dispositif de mémorisation (19), les vecteurs de valeurs étant à disposition à tout moment pour une transmission à une unité de sortie (21, 22, 44).

2. Dispositif selon la revendication 1, **caractérisé en ce que** l'unité de sortie (21, 22, 44) présente des moyens pour la sortie continue d'une grandeur caractérisant l'état de service actuel de la balance.

3. Dispositif selon la revendication 1 ou 2, **caractérisé en ce que** les grandeurs caractérisant l'état de service de la balance sont déposées en fonction du temps dans un fichier d'historique dans le dispositif de mémorisation (19) et peuvent être appelées à tout moment.

4. Dispositif selon la revendication 3, **caractérisé en ce qu'**une imprimante (22) et/ou un affichage (21) et/ou une unité externe de processeur et de mémorisation peuvent être raccordés à l'appareil de mesure par gravimétrie pour la sortie d'un fichier d'historique.

5. Dispositif selon l'une quelconque des revendications 1 à 4, **caractérisé en ce qu'**une interrogation du signal du au moins un capteur d'inclinaison (13) électronique et la mémorisation d'une grandeur caractérisant l'état de service de la balance interviennent à des intervalles de temps réguliers, en particulier modifiables.

6. Dispositif selon l'une quelconque des revendications 1 à 5, **caractérisé en ce qu'**un dispositif d'étalonnage (35) est présent et **en ce qu'**une interrogation du signal du au moins un capteur d'inclinaison (13) électronique et la mémorisation d'une grandeur caractérisant l'état de service de la balance interviennent après chaque mesure d'étalonnage.

7. Dispositif selon l'une quelconque des revendications 1 à 6, **caractérisé en ce qu'**une interrogation du signal du au moins un capteur d'inclinaison (13) électronique et la mémorisation d'une grandeur caractérisant l'état de service de la balance interviennent après chaque mise en route de la balance.

8. Dispositif selon l'une quelconque des revendications 1 à 7, **caractérisé en ce que** le dispositif de traitement de signal (17) ou le capteur d'inclinaison (13) dispose de moyens pour l'attribution de limites, en particulier de limites d'avertissement et/ou d'intervention, à une grandeur caractérisant l'état de service de la balance, cette grandeur étant transmise en même temps que la grandeur caractérisant l'état de service de la balance à l'unité de sortie (21, 22, 44) et étant sortie sur celle-ci.

9. Dispositif selon la revendication 8, **caractérisé en ce que** les limites peuvent être modifiées au moyen d'une unité d'entrée (6).

10. Dispositif selon la revendication 8 ou 9, **caractérisé en ce qu'**un signal d'avertissement acoustique et/ou optique est sorti sur l'unité de sortie (21, 22, 44) lorsqu'on atteint une valeur limite d'avertissement.

11. Dispositif selon l'une quelconque des revendications 8 à 10, **caractérisé en ce que** l'affichage du résultat de pesée est modifié lorsqu'on atteint une valeur limite d'intervention.

12. Dispositif selon l'une quelconque des revendications 8 à 11, **caractérisé en ce que** toute nouvelle pesée est bloquée lorsqu'on atteint une valeur limite d'intervention.

13. Dispositif selon l'une quelconque des revendications 8 à 12, **caractérisé en ce qu'**un dispositif d'étalonnage est présent, lequel exécute un étalonnage automatique lorsqu'une valeur limite est atteinte.

14. Dispositif selon l'une quelconque des revendications 8 à 13, **caractérisé en ce qu'**un dispositif de correction d'inclinaison pouvant être entraîné par un moteur est présent, lequel exécute une correction d'inclinaison automatique lorsqu'une valeur limite est atteinte, de sorte que l'appareil de mesure par gravimétrie est ramené dans sa position de référence.

15. Dispositif selon l'une quelconque des revendications 1 à 14, **caractérisé en ce qu'**une aide de mise à niveau (41), au moyen de laquelle le réglage de l'appareil de mesure par gravimétrie dans sa position de référence est assisté, peut être affichée sur l'unité de sortie.

16. Dispositif selon la revendication 15, **caractérisé en ce que** l'aide de mise à niveau (41) indique l'unité de réglage à actionner et son sens de rotation.

17. Balance avec un dispositif selon l'une quelconque des revendications 1 à 16.
